# EUROPÄISCHE PATENTSCHRIFT

(11) **EP 0 777 816 B1**
(45) Veröffentlichungstag und Bekanntmachung des Hinweises auf die Patenterteilung: **09.09.1998**
(21) Anmeldenummer: 95924327.0
(22) Anmeldetag: 27.06.1995
(51) Int. Cl.: E21F 17/06

(54) **UNTERTÄGIGER ENERGIEZUG**
ENERGY SUPPLY TRAIN FOR UNDERGROUND MINING
TRAIN D'ALIMENTATION EN ENERGIE POUR EXPLOITATIONS MINIERES SOUTERRAINES

(30) Priorität: 03.09.1994 DE 4431523
(43) Veröffentlichungstag der Anmeldung: 11.06.1997
(73) Patentinhaber: Ruhrkohle Aktiengesellschaft, 45128 Essen (DE)
(72) Erfinder: STRACK, Manfred, D-46149 Oberhausen (DE)
(86) Internationale Anmeldenummer: EP9502495
(87) Internationale Veröffentlichungsnummer: WO9607814

(56) Entgegenhaltungen:
- WO-A-85/03546
- DE-A- 2 834 245

## Beschreibung

Die Erfindung betrifft einen untertägigen Energiezug gemäß den Merkmalen des Oberbegriffs des Patentanspruchs 1.

Solche untertägigen Energiezüge sind im Untertagebergbau, insbesondere im untertägigen Steinkohlenbergbau, Stand der Technik, und zwar in der Form, daß jeweils eine Kompaktstation, d. h. ein druckfestes Gehäuse mit eingebauten Schaltgeräten, an jedem seiner Enden in Fahrtrichtung des zugehörigen UTE-Rahmens mit je einem Anschlußkasten für die elektrischen Zuleitungen bzw. Abgänge versehen und jede derartige Kombination aus Kompaktstation und zwei Anschlußkästen an einem separaten UTE-Rahmen angeschlagen ist.

Die Gesamtvorrichtung aus Kompaktstation und Anschlußkästen weist - je nach verwendetem Gehäusetyp bekannter Art - eine Gesamtlänge von 2 bis 2,5 m auf, wobei jeder Anschlußkasten ca. 0,5 m Länge besitzt. Die Länge eines UTE-Rahmens beträgt dagegen 3,3 m, zu denen im Betrieb noch die Länge der für die Kurvengängigkeit des gesamten Energiezuges in Form einer Einschienen-Hängebahn erforderlichen Kuppelstangen zwischen den UTE-Rahmen hinzuzurechnen ist, so daß jede Kompaktstation innerhalb des Energiezuges einen Platzbedarf von ca. 4 m Länge aufweist. In untertägigen Betrieben mit hoher Betriebsmittelkonzentration, beispielsweise in einem Hobel-Abbaubetrieb, sind jedoch zur elektrischen Versorgung aller Betriebsmittel mehrere Kompaktstationen erforderlich, die zusammen mit den erforderlichen, ebenfalls an je einem separaten UTE-Rahmen angeschlagenen Hochleistungstransformatoren zu den in Rede stehenden Energiezügen zusammengestellt sind - so ist überlicherweise in der Bandstrecke eines vorstehend als Beispiel genannten Hobel-Abbaubetriebes ein Energiezug mit **zwei** Hochleistungstransformatoren und **sieben** Kompaktstationen und in dessen Kopfstrecke gleichzeitig ein solcher mit **einem** Hochleistungstransformator und **fünf** Kompaktstationen geparkt. Damit werden jedoch insgesamt 60 m Strecke in unmittelbarer Nachbarschaft der stets kritischen und arbeitsintensiven Streb-Strecken-Übergänge zum Förderstreb zum Parken der notwendigen Energiezüge benötigt, was einerseits eine erhebliche Einschränkung des sowieso schon knappen Raumangebots in diesen Streckenabschnitten für Arbeits-, Transport- und Überwachungsmaßnahmen und andererseits eine erhebliche Behinderung des Zugangs zu den von den Energiezügen jeweils bis zum nächsten Vorrücken für einen längeren Zeitraum zugestellten Ausbauelementen und Versorgungsleitungen - beispielsweise im Falle einer notwendigen Reparatur von diesen - bedeutet. Abgesehen davon, daß sich mit zunehmender Länge der Energiezüge auch das Sicherheitsrisiko für die in seiner unmittelbaren Nähe tätigen Bergleute in der Strecke drastisch erhöht - insbesondere während des Rangierens oder Vorrückens dieser Energiezüge.

Der vorliegenden Erfindung liegt daher die Aufgabe zugrunde, den Raumbedarf von untertägigen Energiezügen deutlich einzuschränken, d. h. insbesondere ihre Längenausdehnung bei zumindest nicht zunehmenden Querabmessungen wesentlich zu reduzieren, ohne dabei weder ihre Funktionsfähigkeit noch ihre bisherigen Sicherheitsvorkehrungen zu beeinträchtigen.

Die Erfindung löst diese Aufgabe mit Hilfe der Merkmale des kennzeichnenden Teils des Patentanspruchs 1.

Dabei erweist es sich als besonders vorteilhaft, daß jeder UTE-Rahmen **zwei** mechanisch durch einen Kasten und elektrisch durch durch diesen Kasten hindurchführende Leitungen zu einer Gesamtvorrichtung verbundene Kompaktstationen trägt und daß die elektrischen Anschlußeinrichtungen durch unmittelbar an den Wänden der druckfesten Gehäuse der Kompaktstationen angebrachte Steckdosen zugelassener Bauart verifiziert werden, weil auf diese Art und Weise die Länge jedes Energiezuges in jedem Fall nahezu halbiert werden kann, ohne die üblichen Sicherheitsvorschriften zu vernachlässigen, da die unmittelbar an den Wänden der druckfesten Gehäuse der Kompaktstationen angebrachten Steckdosen zugelassener Bauart die Funktion der bisher üblichen Anschlußkästen auch in sicherheitstechnischer Hinsicht voll und ganz übernehmen können, dabei jedoch einen wesentlich geringeren Platzbedarf aufweisen. Die mechanische Stabilität der Gesamtvorrichtung aus **zwei** von einem einzigen UTE-Rahmen getragenen Kompaktstationen wird dabei vorteilhafterweise mittels eines einfach herzustellenden verbindenden Kastens, vorzugsweise aus Stahlblech, erzeugt, der gleichzeitig die die beiden Kompaktstationen unmittelbar verbindenden elektrischen Leitungen abschirmt, die in diesem Fall ohne Verwendung von Steckdosen zugelassener Bauart direkt durch die sich gegenüberliegenden Querwände der beiden druckdichten Gehäuse ebenfalls druckdicht hindurchgeführt sind.

Bei einer speziellen Auführungsform des erfindungsgemäßen untertägigen Energiezuges erweist es sich darüber hinaus als besonders vorteilhaft, daß die eine Kompaktstation mit einem Leistungsschalter, mindestens zwei Schütz- oder Beleuchtungseinschüben und der Steuerspannungsversorgung für die Gesamtvorrichtung und die andere Kompaktstaion mit weiteren Schützeinschüben bestückt ist, da mit einer solchen Anordnung der Schaltgeräte in den jeweils zu einer Gesamtvorrichtung zusammengefaßten beiden Kompaktstationen nicht nur eine rein zahlenmäßige Zusammenfassung von jeweils zwei Kompaktstationen herkömmlicher Art, sondern darüber hinaus auch die Zusammenfassung von Funktionen aus unterschiedlichen Kompaktstationen der bisher verwendeten Art erreicht wird, was zu einer weiteren Reduzierung der insgesamt für einen untertägigen Energiezug erforderliche Zahl von - paarweise in einem UTE-Rahmen zusammengefaßten - Kompaktstationen führt. Im Falle des bereits oben als Beispiel angeführten Hobel-Abbaubetreibes ist es dann beispielsweise möglich, in der Bandstrecke dieses Betriebes anstelle eines Energiezuges mit 2 Hochleistungstransformatoren und 7 - jeweils separaten - Kompaktstationen einen solchen mit 2 Hochleistungstransformatoren, aber nur 2 zu Gesamtvorrichtungen zusammengefaßten Paaren von Kompaktvorrichtungen, d. h. insgesamt nur 4 UTE-Rahmen einschließlich Kuppelstangen anstelle von 9 UTE-Rahmen einschließlich Kuppelstangen, und in der Kopfstrecke desselben Betriebes anstelle einer Anordnung aus 6 UTE-Rahmen (1 Hochleistungstransformator und 5 - separate - Kompaktstationen) eine solche aus 2 UTE-Rahmen (1 Hochleistungstransformator und 1 Gesamtvorrichtung aus zwei Kompaktstationen) einzusetzen. Damit werden jedoch von beiden Energiezügen in Band- und Kopfstrecke insgesamt anstelle der ursprünglichen 60 m Strecke nur noch 24 m Strecke zum Parken benötigt, d. h. weniger als die Hälfte des ursprünglich erforderlichen Raumes.

Bei einer Weiterbildung des erfindungsgemäßen Energiezuges ist es außerdem als Vorteil anzusehen, wenn die andere Kompaktstation mit zwölf weiteren Schützeinschüben versehen ist, da dann in den druckfesten Gehäusen bekannter Bauart auch Schützeinschübe bekannter Art verwendet werden können, was die Herstellung der Kompaktstationen wesentlich vereinfacht und die erforderlichen Investitionskosten deutlich herabsetzt.

Vorteilhaft ist auch eine Ausführungsform des in Rede stehenden Energiezugs, bei der der Kasten neben den durch ihn hindurchführenden elektrischen Leitungen auch ein Anzeige- und Bedienfeld aufweist, weil damit erreicht wird, daß trotz der räumlichen Konzentration des gesamten Energiezuges neben dem ursprünglichen Sicherheitsstandard auch die Bedienerfreundlichkeit der Gesamtanordnung, die bisher -zumindest teilweise - durch die - ansonsten raumfressenden - Anschlußkästen gegeben wurde, aufrechterhalten bzw. noch verbessert wird.

Als vorteilhafte Ausführungsform des Energiezuges ist auch eine solche anzusehen, bei der die Hochleistungstransformatoren mindestens 630 kVA-Transformatoren sind, weil derartige Transformatoren Stand der Technik im Untertagebergbau, insbesondere im untertägigen Steinkohlenbergbau, sind und ihre Verwendung demzufolge die Konstruktion der erfindungsgemäßen Energiezüge deutlich vereinfacht und damit ebenfalls die Investitionskosten senkt. Entsprechendes gilt auch dann, wenn die Steckdosen zugelassener Bauart 1000 V-Steckdosen sind.

Als vorteilhaft ist bei einer Weiterbildung des erfindungsgemäßen untertägigen Energiezuges auch anzusehen, daß die Steckdosen zugelassener Bauart an den senkrecht zur Fahrtrichtung der UTE-Rahmen ausgerichteten Stirnwänden der Kompaktstationen am jeweiligen Ende der Gesamtvorrichtung angeordnet sind, weil damit alle elektrischen Zuleitungen und Abgänge zu den Gesamtvorrichtungen aus jeweils zwei Kompaktstationen weitgehend in den durch die Kuppelstangen freigehaltenen, aber ansonsten auch nur in Ausnahmefällen nutzbaren Raum zwischen den UTE-Rahmen verlegt werden können, wo sie die sonstigen Arbeits-, Transport- und Überwachungsmaßnahmen am wenigsten beeinträchtigen können.

Ein Ausführungsbeispiel einer Gesamtvorrichtung aus zwei in einem UTE-Rahmen zusammengefaßten Kompaktstationen eines erfindungsgemäßen untertägigen Energiezuges ist in der Zeichnung dargestellt.

Es zeigt:

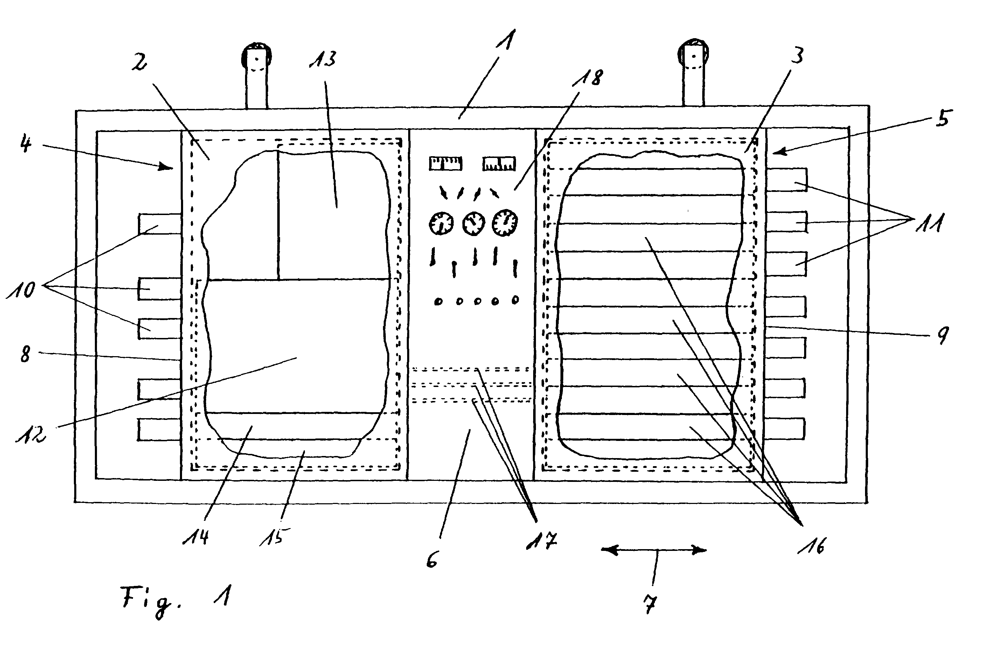

- Fig. 1:: Aufsicht auf eine Gesamtvorrichtung aus zwei an einem einzigen UTE-Rahmen angeschlagenen Kompaktstationen für einen untertägigen Energiezug in schematischer und teilweise durchbrochener Darstellung.

Die Fig. 1 zeigt zunächst in schematischer Darstellung einen im untertägigen Steinkohlenbergbau bekannten Universal-Transport-Einheits-Rahmen (UTE-Rahmen) 1 als im Verbund einer Einschienen-Hängebahn einsetzbares Element, an dem zwei jeweils in einem druckfesten Gehäuse 2, 3 untergebrachte Kompaktstationen 4, 5 mit Schaltgeräten für die Versorgung untertägiger Betriebsmittel mit elektrischer Energie angeschlagen sind. Zur Erhöhung der mechanischen Stabilität der gezeigten Gesamtvorrichtung sind die beiden druckfesten Gehäuse 2, 3 der Kompaktstationen 4, 5 durch einen sie verbindenden Kasten 6 aus Stahlblech kraftschlüssig miteinander verbunden. Die druckfesten Gehäuse 2, 3 tragen außerdem auf ihrer jeweils der anderen Kompaktstation 5, 4 abgewandten, senkrecht zur durch den symbolischen Doppelpfeil 7 angezeigten Fahrtrichtung der den UTE-Rahmen 1 einschließenden Einschieben-Hängebahn ausgerichteten Stirnfläche 8, 9 1000 V-Steckdosen 10, 11 zugelassener Bauart als elektrische Anschlußeinrichtungen für die Zuleitungen bzw. Abgänge der elektrischen Energie zu bzw. von den Schaltgeräten in den Kompaktstationen 4, 5.

Im vorliegenden Fall, der jedoch nicht zwangsläufig ist, stellt die linke Kompaktstation 4 mit den Steckdosen 10 die Eingangsstufe der Gesamtvorrichtung dar. Sie enthält daher einerseits die Steuerspannungsversorgung 12 der Gesamtvorrichtung und andererseits einen Leistungsschalter 13 sowie aus Gründen einer optimalen Raumnutzung noch zwei Schütz- oder Beleuchtungseinschübe 14, 15. Die andere Kompaktstation 5 enthält dagegen nur weitere - im vorliegenden, jedoch nicht zwangsläufigen Fall - zwölf Schützeinschübe 16 bekannter Art, die hier so ausgewählt sind, daß sie den vorhandenen Raum gerade optimal nutzen. Außerdem trägt das druckfeste Gehäuse 3 der Kompaktstation 5 alle erforderlichen elektrischen Ausgangseinheiten der Gesamtvorrichtung in Form der Steckdosen 11. Die elektrischen Verbindungen zwischen den Schaltgeräten 12 bis 15 der Kompaktstation 4 und den weiteren Schützeinschüben 16 bzw. den als Ausgangseinheiten dienenden Steckdosen 11 in bzw. an der Kompaktstation 5 werden von durch den Kasten 6 hindurchführenden Leitungen 17 hergestellt, die hier ebenfalls nur schematisch angedeutet sind. Selbstverständlich wird ein Teil der Steckdosen 11 unmittelbar von den weiteren Schützeinschüben 16 mit Schaltimpulsen bzw. elektrischer Energie beaufschlagt.

Zur Erhöhung der Bedienerfreundlichkeit der Gesamtvorrichtung weist der Kasten 6 im vorliegenden, jedoch ebenfalls nicht zwangsläufigen Fall neben den durch ihn hindurchführenden Leitungen 17 noch ein Anzeige- und Bedienfeld 18 auf. Dessen Gestaltung steht dem Anwender des vorbeschriebenen erfindungsgemäßen untertägigen Energiezuges selbstverständlich ebenso frei wie die innere Gestaltung der Kompaktstationen 4, 5, die Auswahl und Anordnung der Steckdosen 10, 11 oder auch die tatsächliche äußere und innere Gestaltung des Kastens 6, ohne daß er den Schutzbereich des nachgesuchten Patentes verlassen muß.

### Bezugszeichenliste

- 1: UTE-Rahmen
- 2,3: druckfeste Gehäuse
- 4,5: Kompaktstationen
- 6: Kasten
- 7: symbolischer Doppelpfeil für die Fahrtrichtung der Einschienen-Hängebahn
- 8,9: Stirnflächen
- 10,11: 1000 V-Steckdosen
- 12: Steuerspannungsversorgung der Gesamtvorrichtung
- 13: Leistungsschalter
- 14,15: Schutz- oder Beleuchtungseinschübe
- 16: weitere Schützeinschübe
- 17: Leitungen durch den Kasten 6
- 18: Anzeige- und Bedienfeld

## Patentansprüche

1. Untertägiger Energiezug mit mehreren durch Kuppelstangen verbundenen, als Elemente einer Einschienen-Hängebahn einsetzbaren Universal-Transport-Einheits-Rahmen (UTE-Rahmen), von denen mindestens einer einen Hochleistungstransformator und mindestens ein weiterer eine in einem druckfesten Gehäuse angeordnete Kompaktstation mit Schaltgeräten für die versorgung untertätiger Betriebsmittel mit elektrischer Energie und mit elektrischen Anschlußeinrichtungen an der Eingangs- und Ausgangsseite des druckfesten Gehäuses trägt,
dadurch gekennzeichnet,
daß jeder UTE-Rahmen (1) ***zwei*** mechanisch durch einen Kasten (6) und elektrisch durch durch diesen Kasten (6) hindurchführende Leitungen (17) zu einer Gesamtvorrichtung verbundene Kompaktstationen (4,5) trägt und
daß die elektrischen Anschlußeinrichtungen durch unmittelbar an den Wänden der druckfesten Gehäuse (2,3) der Kompaktstationen (5,6) angebrachte Steckdosen (10,11) zugelassener Bauart verifiziert werden.

2. Untertätiger Energiezug nach Anspruch 1,
dadurch gekennzeichnet,
daß die eine Kompaktstation mit einem Leistungsschalter (13), mindestens zwei Schütz- oder Beleuchtungseinschüben (14,15) und der Steuerspannungsversorgung (12) für die Gesamtvorrichtung und die andere Kompaktstation mit weiteren Schützeinschüben (16) bestückt ist.

3. Untertätiger Energiezug nach Anspruch 2,
dadurch gekennzeichnet,
daß die andere Kompaktstation mit zwölf weiteren Schutzeinschüben (16) versehen ist.

4. Untertätiger Energiezug nach einem der Ansprüche 1 bis 3,
dadurch gekennzeichnet,
daß der Kasten (6) neben den durch ihn hindurchführenden elektrischen Leitungen (17) auch ein Anzeige- und Bedienfeld (18) aufweist.

5. Untertätiger Energiezug nach einem der Ansprüche 1 bis 4,
dadurch gekennzeichnet,
daß die Hochleistungstransformatoren mindestens 630 kVA-Transformatoren sind.

6. Untertägiger Energiezug nach einem der Ansprüche 1 bis 5,
dadurch gekennzeichnet,
daß die Steckdosen (10,11) zugelassener Bauart 1000 V-Steckdosen sind.

7. Untertägiger Energiezug nach einem der Ansprüche 1 bis 6,
dadurch gekennzeichnet,
daß die Steckdosen (10,11) zugelassener Bauart an den senkrecht zur Fahrtrichtung (7) der UTE-Rahmen (1) ausgerichteten Stirnwänden (8,9) der Kompaktstationen (4,5) am jeweiligen Ende der Gesamtvorrichtung angeordnet sind.

## Claims

1. An underground power-supply train comprising a plurality of Universal-transportation-unit frames (UTU frames) which are connected by coupling rods and are usable as elements of a suspended monorail, and at least one of which carries a high-power transformer and at least one other of which carries a compact station which is arranged in a pressure-resistant housing and has switchgear for supplying underground operating means with electrical energy and has electrical connection devices on the input and output side of the pressure-resistant housing, characterised in that each UTU frame (1) carries two compact stations (4, 5) connected mechanically by a box (6) and electrically by lines (17) extending through this box (6) to form an overall device, and in that the electrical connection devices are constituted by sockets (10, 11) of approved design mounted directly on the walls of the pressure-resistant housings (2, 3) of the compact stations (5, 6 [sic - 4, 5]).

2. An underground power-supply train according to claim 1, characterised in that one compact station is provided with a power switch (13), at least two contactor or lighting inserts (14, 15) and the control voltage supply (12) for the overall device, and the other compact station is provided with further contactor inserts (16).

3. An underground power-supply train according to claim 2, characterised in that the other compact station is provided with twelve further contactor inserts (16).

4. An underground power-supply train according to any one of claims 1 to 3, characterised in that the box (6) also has a display and operating panel (18) in addition to the electric lines (17) extending through the box (6).

5. An underground power-supply train according to any one of claims 1 to 4, characterised in that the high-power transformers are at least 630 kVA transformers.

6. An underground power-supply train according to any one of claims 1 to 5, characterised in that the sockets (10, 11) of approved design are 1000 V sockets.

7. An underground power-supply train according to any one of claims 1 to 6, characterised in that the sockets (10, 11) of approved design are arranged on the end walls (8, 9) of the compact stations (4, 5) at the respective end of the overall device, the end walls (8, 9) being perpendicular to the direction of travel (7) of the UTU frames (1).

## Revendications

1. Train d'alimentation en énergie pour exploitation minière souterraine, comportant plusieurs châssis universels unitaires de transport (châssis de véhicule UTE) utilisés comme éléments sur une voie monorail suspendue, parmi lesquels au moins l'un porte un transformateur à haute puissance et au moins un autre porte un poste compact, disposé dans un caisson résistant à la pression, doté de dispositifs de commutation pour l'alimentation en énergie électrique de moyens d'exploitation minière souterraine, ainsi que de dispositifs de raccordement électrique sur le côté de l'entrée et sur le côté de la sortie du caisson résistant à la pression
caractérisé en ce que
chaque châssis de véhicule UTE (1) porte deux postes compacts (4, 5) rassemblés en un dispositif d'ensemble, mécaniquement par une armoire (6) et électriquement par des conduits (17) traversant cette armoire (6), et en ce que
les dispositifs de raccordement électrique sont réalisés sous la forme de prises de courant (10, 11) de construction agréée installées directement sur les parois des caissons résistant à la pression (2, 3) des postes compacts (5, 6).

2. Train d'alimentation en énergie pour exploitation minière souterraine selon la revendication 1, caractérisé en ce que l'un des postes compacts est équipé d'un commutateur de puissance (13), d'au moins deux modules de protection ou d'éclairage (14, 15) et de l'alimentation en tension de commande (12) pour le dispositif d'ensemble, l'autre poste compact étant équipé d'autres modules de protection (16).

3. Train d'alimentation en énergie pour exploitation minière souterraine selon la revendication 2, caractérisé en ce que l'autre poste compact est doté de douze autres modules de protection (16).

4. Train d'alimentation en énergie pour exploitation minière souterraine selon l'une des revendications 1 à 3, caractérisé en ce qu'en plus des conduits électriques (17) qui la traversent, l'armoire (6) présente également un tableau de signalisation et de commande (18).

5. Train d'alimentation en énergie pour exploitation minière souterraine selon l'une des revendications 1 à 4, caractérisé en ce que les transformateurs à haute puissance sont des transformateurs d'au moins 630 kVA.

6. Train d'alimentation en énergie pour exploitation minière souterraine selon l'une des revendications 1 à 5, caractérisé en ce que les prises de courant (10, 11) de construction agréée sont des prises de courant à 1000 V.

7. Train d'alimentation en énergie pour exploitation minière souterraine selon l'une des revendications 1 à 6, caractérisé en ce que les prises de courant (10, 11) de construction agréée sont disposées à chaque extrémité du dispositif d'ensemble, sur les parois frontales (8, 9) des postes compacts (4, 5) qui sont orientées perpendiculairement à la direction d'avancement (7) du châssis de véhicule UTE (1).
